# EUROPEAN PATENT APPLICATION

(11) **EP 1 978 403 A2**
(43) Date of publication of application: **08.10.2008**
(21) Application number: 08001645.4
(22) Date of filing: 29.01.2008
(51) Int. Cl.: G03B 5/00

(54) **Lens device**

(30) Priority: 14.03.2007 JP 2007065899
(71) Applicant: Fujinon Corporation, Saitama-shi, Saitama (JP)
(72) Inventor: Ozaki, Takao, Saitama-shi, Saitama (JP); Nagata, Koichi, Saitama-shi, Saitama (JP); Horio, Motohiko, Saitama-shi, Saitama (JP)
(74) Representative: Klunker . Schmitt-Nilson . Hirsch

(57) **Abstract**

A lens device is provided and includes: a vibration-proof lens; a movable lens disposed adjacent to the vibration-proof lens and moving in a direction of an imaging optical axis of the lens device; and a plate-like motor coil disposed around an outer periphery of the vibration-proof lens and driving the vibration-proof lens, the movable lens being located in a retracted position on the imaging optical axis relative to the plate-like motor coil when the movable lens moves closest to the plate like motor coil.

## Description

### BACKGROUND OF THE INVENTION

### 1. Field of the Invention

The present invention relates to a lens device including a vibration-proof lens, and more particularly to a lens device in which a thin plate-like motor coil is used as an actuator for a vibration-proof lens and a movable lens is disposed adjacent to the vibration-proof lens.

### 2. Description of Related Art

Recently, thin plate-like motor coils (e.g. product name: "Fine Pattern Coil" (Registered Trademark)) have been developed based on plating techniques. The camera size has been reduced by using the plate-like motor coil as an actuator of a camera, such as a digital video camera.

JP-A-2005-308778 and JP-A-2006-71902 disclose vibration-proof lens actuators, using a voice coil motor, which is incorporated in a camera lens device. By using a plate-like motor coil in place of a voice coil motor, the lens device can be reduced in diameter without reducing the size of the vibration-proof lens. In such a case, the plate-like motor coil is arranged around the outer periphery of the vibration-proof lens such that the surface thereof is along the moving direction of the vibration-proof lens.

In the meanwhile, there is a lens device including a movable lens, such as a focus lens, that is adjacent to a vibration-proof lens and to move toward the rear on the optical axis. However, the plate-like motor coil is sometimes obstructive to the movement of the movable lens, that is, the movable lens interferes with the plate-like motor coil of the vibration-proof lens. In order to address this issue, it can be considered to reduce the length (width) of the plate-like motor coil in the optical axis direction in an amount corresponding to the interference of the movable lens. However, this method is disadvantageous in that required power is not obtainable because of the size-reduced plate-like motor coil. Meanwhile, there is also a way to increase the imaging optical axial length of the lens device in an amount corresponding to the interference. However, in this method, the lens device increases its size uselessly.

### SUMMARY OF THE INVENTION

An object of an illustrative, non-limiting embodiment of the invention is to provide a lens device including a movable lens adjacent to a vibration-proof lens, in which the lens device can be made compact with the optical axial length thereof not increased without reducing the optical axial length of a plate-like motor coil.

According to an aspect of the invention, there is provided a lens device including: a vibration-proof lens; a movable lens disposed adjacent to the vibration-proof lens and moving in a direction of an imaging optical axis of the lens device; and a plate-like motor coil disposed around an outer periphery of the vibration-proof lens and driving the vibration-proof lens, the movable lens being located in a retracted position on the imaging optical axis relative to the plate-like motor coil when the movable lens moves closest to the plate like motor coil.

In the lens device, since the movable lens is located in a position retracted on the imaging optical axis relative to the plate-like motor coil when the movable lens is moved closest to the vibration-proof lens. A lens device can be provided which is made compact with the optical axial length thereof not increased without reducing the optical axial length of a plate-like motor coil.

In the lens device, the lens device may be a four-grouped lens device including a first lens group, a second lens group, a third lens group, and a fourth lens group, in which the first lens group is a front lens, the second lens group is a variator lens moving in the direction of the imaging optical axis, the third lens group is the vibration-proof lens, and the fourth lens group is the movable lens that is a focus lens.

The lens device is one of exemplary lens devices of the present invention, in which a four-grouped structure is applied. The lens device includes the first lens group as a front lens, the second lens group as a variator lens to change the focal length, the third lens group as the vibration-proof lens and the fourth lens group being the movable lens as a focus lens. In such a lens device of a four-group lens configuration, maintaining the stroke of the focus lens may be required for maintaining the optical characteristics of the lens device. While maintaining the stroke, the structure is applied that the focus lens is to be retracted on the imaging optical axis relative to the motor coils when it comes closest to the vibration-proof lens, and thereby, a lens device of a four-lens configuration can be provided, which is compact in the optical axis direction without need to reduce the length of the plate-like motor coils in the optical axis direction.

### BRIEF DESCRIPTION OF THE DRAWINGS

The features of the invention will appear more fully upon consideration of the exemplary embodiment of the invention, which are schematically set forth in the drawings, in which:
Fig. 1 is a sectional view showing a lens device according to an exemplary embodiment of the present invention;
Fig. 2 is a perspective view of a casing furnished with a vibration-proof lens of the lens device shown in Fig. 1, as viewed from the rear on the imaging optical axis;
Fig. 3 is a perspective view of the casing shown in Fig. 2 removed of an actuator;
Fig. 4 is a perspective view showing that a lens frame of a focus lens is in a position closest to the imaging position relative to the casing; and
Fig. 5 is a perspective view showing that a lens frame of a focus lens is in a position closest to the subject relative to the casing,
wherein some of reference numerals in the drawings are set forth below.
10: Lens device; 11: lens barrel body; 12: first lens group; 14: second lens group; 16: third lens group; 18: fourth lens group; 20: color separation prism; 22, 24 and 26: imaging devices; 28 and 30: guide bars; 32, 34 and 50: lens frame; 62 and 92: plate-like motor coils; and 72 and 102: magnets.

### DETAILED DESCRIPTION OF THE EXEMPLARY EMBODIMENTS

Although the invention will be described below with reference to exemplary embodiments thereof, the following exemplary embodiments and modifications do not restrict the invention.

According to an exemplary embodiment of the invention, the movable lens is located in a position retracted on the imaging optical axis relative to the plate-like motor coil when the movable lens is moved closest to the vibration-proof lens. The lens device can be compact not long in the optical axis direction without the need to reduce the length of the plate-like motor coils in the optical axis direction.

In accordance with the appended drawings, explanation will be now made on an exemplary embodiment of a lens device according to the present invention.

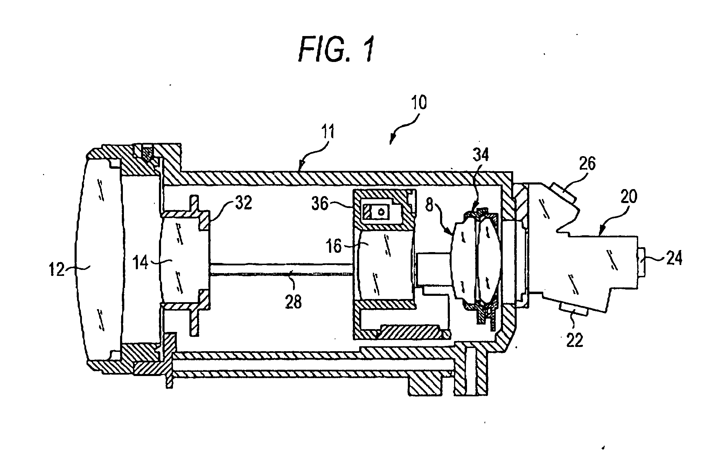

Fig. 1 shows a side sectional view of a lens device according to an exemplary embodiment of the present invention. The lens device 10 includes a first lens group 12, a second lens group 14, a third lens group I6 and a fourth lens group 18, in the order from the front (closer to a subject) to the rear (closer to an image) with respect to the imaging optical axis thereof. The subjective light, passed through the first to fourth lens groups 12 to 18, is focused, through a color separation prism 20 constituting a color-separation optical system, on imaging devices 22, 24, 26 provided at the R, G and B exit ends of the color separation prism 20. Incidentally, a camera body (not shown), to which the lens device 10 is attached, mounts thereon a signal processing circuit, etc. (not shown) that performs required processing (white balance, γ-correction, etc.) on the image signal obtained from the imaging devices 22, 24, 26 and produces a video signal in a form.

The first lens group 12 is so-called a front lens, and the second lens group 14 is a variator lens for changing the focal length. The third lens group 16 is a vibration-proof lens driven in a direction for canceling the vibrations as caused by unintentional movement or so, and the fourth lens group 18 is a focus lens for focal adjustment.

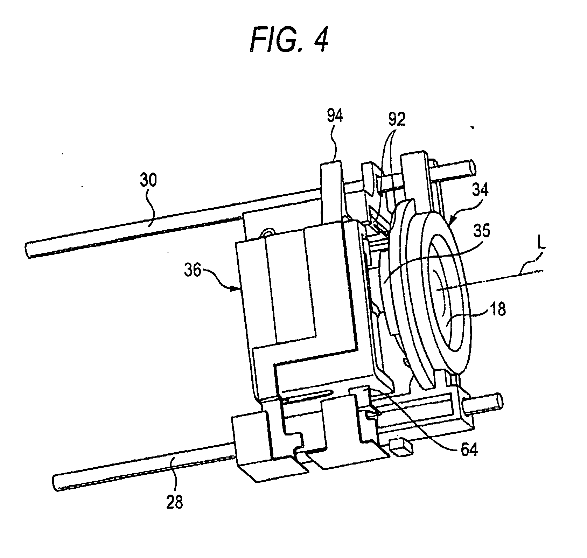

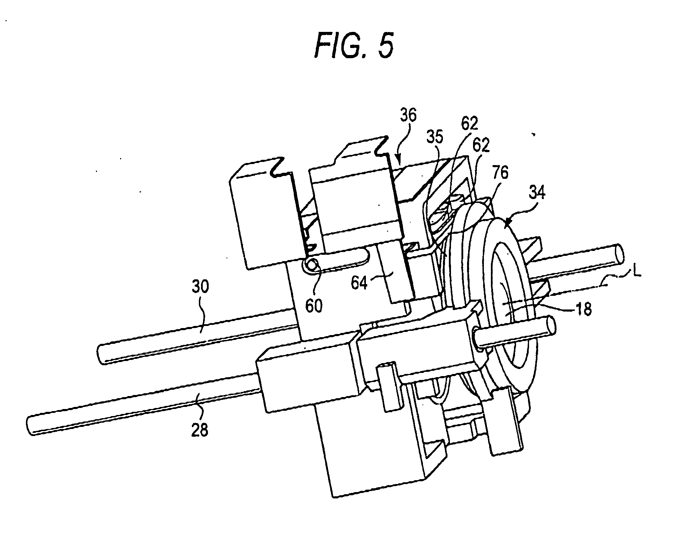

The first to fourth lens groups 12 to 18 are held within a lens barrel body 11. Within the lens barrel body 11, a pair of guide bars 28, 30 (see Figs. 4 and 5) are arranged extending in parallel with the optical axis. On the guide bars 28, 30, there are slidably supported a lens frame 32 of the second lens group 14 and a lens frame 34 of the fourth lens group 18. Furthermore, a casing 36 of the third lens group 16 is fixed on the guide bars 28, 30. The casing 36 may be fixed directly on the lens barrel body 11.

The second lens group 14 is provided with a nut (not shown) structuring a screw feed device. To the nut, screw-coupled is a feed screw (not shown) structuring a screw feed device similarly. The feed screw is arranged in parallel with the optical axis, having an end coupled to the output shaft of a stepping motor (not shown) for zooming. The zooming stepping motor has a zoom driver circuit (not shown) so that when a zoom signal is outputted thereto from the camera body, the zooming stepping motor rotates the feed screw in a direction corresponding to the relevant signal. Due to this, the second lens group 14 is moved back and forth in the optical-axis direction along the guide bars 28, 30, thus being adjusted at a desired focal length.

The fourth lens group 18 is similarly provided with a nut (not shown) structuring a screw feed device. To the nut, screwed is a feed screw (not shown) structuring a screw feed device similarly. The feed screw is arranged in parallel with the optical axis, having an end coupled to the output shaft of a focusing stepping motor (not shown). The focusing stepping motor has a focus driver circuit (not shown) so that, when a focus signal is outputted thereto from the camera body, the focusing stepping motor rotates the feed screw in a direction corresponding to the relevant signal. Due to this, the fourth lens group 18 is moved back and forth in the optical-axis direction along the guide bars 28, 30, thus effecting focal adjustment.

A structure of the vibration-proof mechanism will be explained.

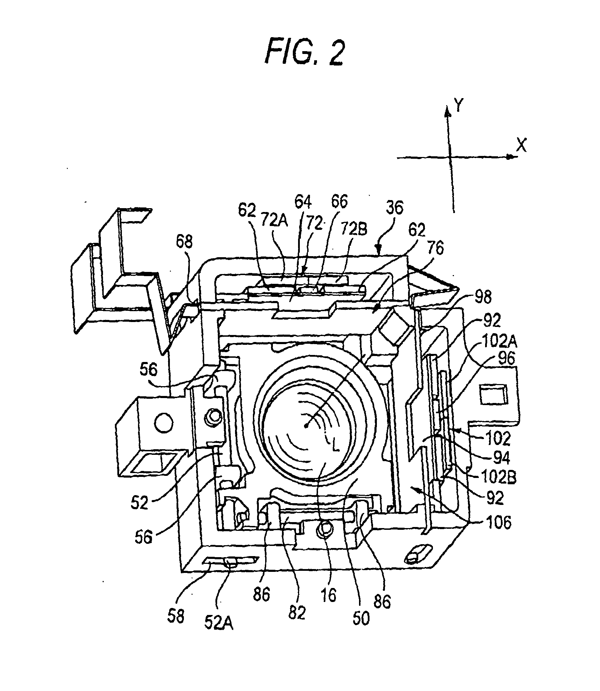

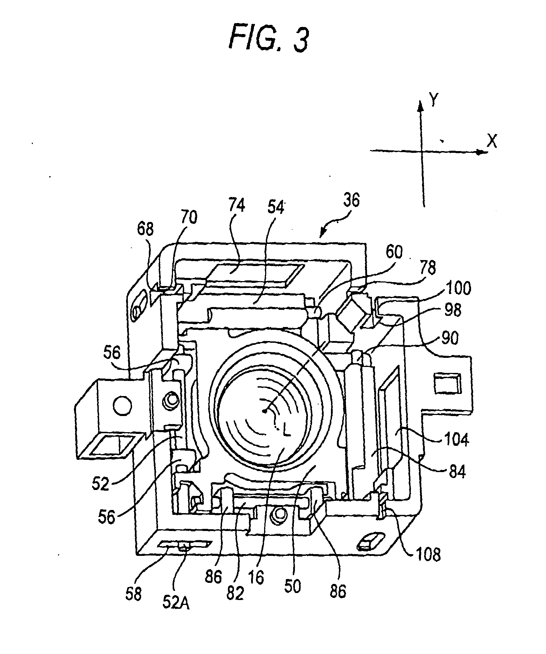

Fig. 2 is a perspective view of the casing 36 furnished with a vibration-proof lens 16 as viewed from the rear, and Fig. 3 is a perspective view of the casing 36 shown in Fig. 2 removed of an actuator.

As shown in those figures, the third lens group (referred herein to as a vibration-proof lens for convenience sake) 16 is held in a lens frame 50. The lens frame 50 is supported to move in different two directions on a plane orthogonal to the imaging optical axis L. From now on, the moving directions of the vibration-proof lens 16 are taken as X (horizontal in Figs. 2 and 3) and Y (vertical in Figs. 2 and 3) directions. The mechanism for moving the vibration-proof lens 16 in the X direction is referred to as an X-moving mechanism, and the mechanism for moving it in the Y direction is referred to as a Y-moving mechanism.

First, the X-moving mechanism will be explained.

A lens frame 50 is fixed with a moving guide bar 52. The moving guide bar 52 is arranged in the Y direction so that a slider 54 can be engaged with the moving guide bar 52. The slider 54 is formed in an L-form having upper and left side portions. On the left side, there are formed two guides 56, 56 protruding in the optical-axis. The guides 56 are respectively formed with guide holes (not shown) in the Y direction so that the moving guide bars 52 are passed through the guide holes. Due to this, the slider 54 is engaged over the movable guide bar 52 in a manner to slide in the Y direction. Accordingly, the lens frame 50 is supported to slide in the Y direction by means of the slider 54. The,lens frame 50 is restricted from moving in the X direction so that, when the slider 54 is moved in the X direction, the lens frame 50 is also moved in the X direction.

Incidentally, the moving guide bar 52 has a lower end 52A, in the figure, in engagement with an elongate hole 58 formed in the X direction in the casing 36. This prevents the lens frame 50 from inclining (inclining relative to the optical axis).

A guide hole (not shown) is formed in the X direction in the upper side portion of the slider 54, so that a fixed guide bar 60 is passed through the guide hole. The fixed guide bar 60 is arranged in the X direction, the both ends of which are fixed to the casing 36. Due to this, the slider 54 is supported for sliding in the X direction along the fixed guide bar 60. Sliding the slider 54 in the X direction causes the lens frame 50, engaged with the left side portion of the slider 54 through moving guide bar 52, to slide in the X direction.

Meanwhile, a plate-like motor coil (product name: "Fine Pattern Coil" (Registered Trademark)) 62 is fixed on the upper side portion thereof. The motor coil 62 is bonded, at its underside, an output end of a flexible printed board 64. The motor coil 62 is arranged in the X direction, in a position around the outer periphery of the vibration-proof lens 16. The flexible printed board 64 is secured with a position sensor 66, such as a Hall element, through alignment.

The flexible printed board 64 is extended in the X direction from the motor coil 62 to the outside of the casing 36 through a side opening 68 of the casing 36. The flexible printed board 64, extended to the outside, is bent toward the outside. After a V-formed (or U-formed) bent portion is formed, it is extended from a position of the lens barrel body 11 (see Fig. 1) to the outside of the lens barrel body 11. The lead-out flexible printed board 64 is connected to a unit that takes control of supplying power and operating the vibration-proof lens 16. Incidentally, the side opening 68 of the casing 36 is in communication with the end surface of the casing 36 through a slit 70. By passing the flexible printed board 64 through the slit 70, the flexible printed board 64 is arranged to the inside of the side opening 68.

On the outer side of the motor coil 62, a magnet 72 is arranged opposed to the motor coil 62. The magnet 72 is formed in a rectangular plate form and arranged such that the S and N poles 72A, 72B are arranged in the X direction. The foregoing position sensor 66 is arranged opposite to the boundary of the S and N poles 72A, 72B of the magnet 72, to detect a change of magnet field. The detected signal is outputted to the unit through the flexible printed board 64.

A metal plate, to serve as a yoke, is provided on the outer side of the magnet 72. The metal plate is to be attracted toward the magnet 72 through the action of the magnetic force of the magnet 72. The metal plate is formed in a rectangular form greater than the magnet 72, and attached in the state that the edge thereof protrudes from the magnet 72. The casing 36 has an outer surface formed with a recess in a size equal to the metal plate, on the inner side of which is formed an opening 74 in a size equal to the magnet 72. The metal plate is received in the recess of the casing 36 while the magnet 72 is received in the opening 74.

On the inner side of the motor coil 62, a metal plate 76, to serve as a yoke, is arranged in the X direction and oppositely to the motor coil 62. The metal plate 76 has one end inserted in the slit 70 and the other end inserted in the groove 78 formed in the casing 36, thereby being fixed in the casing 36.

The X-moving mechanism, constructed as above, is arranged with the motor coil 62 in the magnetic field formed by the magnet 72 and two metal plates (one omitted in showing) 76. By energizing the motor coil 62, the motor coil 62 and the supporting slider 54 undergo a force in the X direction. Accordingly, the slider 54 and the lens frame 50 are moved in the X direction, thus moving the vibration-proof lens 16 in the X direction. The description made so far is on the vibration-proof mechanism.

Now explanation is made on the Y-moving mechanism.

The lens frame 50 is fixed with a moving guide bar 82. The moving guide bar 82 is arranged in the X direction so that a slider 84 can be engaged with the moving guide bar 82. The slider 84 is formed in an L-form having upper and left side portions. On the left side portion, there are formed two guides 86, 86 protruding in the optical-axis direction. The guides 86 are respectively formed with guide holes (not shown) in the X direction so that the movable guide bars 82 are passed through the guide holes. Due to this, the slider 84 is engaged over the movable guide bar 82 in a manner to slide in the X direction. Accordingly, the lens frame 50 is supported for sliding in the X direction by means of the slider 84. The lens frame 50 is restricted from moving in the Y direction so that, when the slider 54 is moved in the Y direction, the lens frame 50 is also moved in the Y direction.

A guide hole (not shown) is formed in the Y direction in the right side portion of the slider 84, so that a fixed guide bar 90 is passed through the guide hole. The fixed guide bar 90 is arranged in the Y direction, the both ends of which are fixed to the casing 36. Due to this, the slider 84 is supported for sliding in the Y direction along the fixed guide bar 90. Sliding the slider 84 in the Y direction causes the lens frame 50, engaged with the lower side portion of the slider 54 through moving guide bar 52, to slide in the X direction.

Meanwhile, a plate-like motor coil (product name: "Fine Pattern Coil" (Registered Trademark)) 92 is fixed on the right side portion of the slider 54. The motor coil 92 is bonded, at its left surface, an output end of a flexible printed board (hereinafter, referred to as "flexible printed board") 94. The motor coil 92 is arranged in the Y direction, in a position around the outer periphery of the vibration-proof lens 16. The flexible printed board 94 is secured with a position sensor 96, such as a Hall element, through alignment.

The flexible printed board 94 is extended in the X direction from the motor coil 92 to the outside of the casing 36 through a side opening 98 of the casing 36. The flexible printed board 64, extended to the outside, is bent toward the outer. After a V-formed (or U-formed) bent portion is formed, it is extended from a predetermined position of the lens barrel body 11 (see Fig. 1) to the outside of the lens barrel body 11. The lead-out flexible printed board 94 is connected to the unit that takes control of supplying power and operating the vibration-proof lens 16. Incidentally, the side opening 98 of the casing 36 is in communication with the end surface of the casing 36 through a slit 100. By passing the flexible printed board 94 through the slit 100, the flexible printed board 94 is arranged to the inside of the side opening 98.

On the outer side of the motor coil 62, a magnet 102 is arranged opposed to the motor coil 92. The magnet 102 is formed in a rectangular plate form and arranged such that the S and N poles 102A, 102B are arranged in the Y direction. The foregoing position sensor 96 is arranged opposite to the boundary of the S and N poles 102A, 102B of the magnet 102, to detect a change of magnet field. The detected signal is outputted to the unit through the flexible printed board 94.

A metal plate, to serve as a yoke, is provided on the outer side of the magnet 102. The metal plate is to be attracted toward the magnet 102 through the action of the magnetic force of the magnet 102. The metal plate is formed in a rectangular form greater than the magnet 102, and attached in the state that the edge thereof protrudes from the magnet 72. The casing 36 has an outer surface formed with a recess in a size equal to the metal plate, on the inner side of which is formed an opening 104 in a size equal to the magnet 102. The metal plate is received in the recess of the casing 36 while the magnet 102 is received in the opening 104.

On the inner side of the motor coil 92, a metal plate 106, to serve as a yoke, is arranged in the Y direction and oppositely to the motor coil 92. The metal plate 106 has one end inserted in the slit 100 and the other end inserted in the groove 108 formed in the casing 36, thereby being fixed in the casing 36.

The Y-moving mechanism, constructed as above, is arranged with the motor coil 92 in the magnetic field formed by the magnet 102 and two metal plates (one omitted in showing) 106. By energizing the motor coil 92, the motor coil 92 and the supporting slider 84 undergo a force in the Y direction. Accordingly, the slider 84 and the lens frame 50 are moved in the Y direction, thus moving the vibration-proof lens 16 in the Y direction. The description made so far is on the vibration-proof mechanism.

Figs. 4 and 5 shows the lens frame 34 holding the fourth lens group (referred herein to as a focus lens for convenience sake) 18 in its respective moving end positions relative to the casing 36 of the vibration-proof lens 16. Fig. 4 illustrates the lens frame 34 in a position closest to the imaging position relative to the casing 36 while Fig. 5 illustrates the lens frame 34 in a position closest to the subject relative to the casing 36. Incidentally, Fig. 4 is a top view taken in Fig. 5.

In the closer position of the lens frame 34 shown in Fig. 5, the lens frame 34 is located in a position retracted at its front cylinder 35 on the imaging optical axis L relative to the plate-like motor coils 62, 92 (see Figs. 2 and 3) arranged around the outer periphery of the vibration-proof lens 16.

Namely, according to the lens device 10 of the embodiment, when the focus lens 18 is moved closest to the vibration-proof lens 16, the casing 36 of the vibration-proof lens 16 and the adjacent lens holder 34 of the focus lens 28 structurally is located in a position retracted, at the front cylinder 35 of the lens holder 34, on the imaging optical axis L relative to the motor coils 62, 92. By thus taking such a retracting structure, the lens device 10 can be constructed short in the length of the motor coils 62, 92 in the optical axis direction in order to avoid the interference of the motor coils 62, 92 with the lens frame 34. In addition, in order to avoid the interference between the motor coils 62, 92 and the lens frame 34, the lens device 10 can be structured without uselessly increasing the length in the optical-axis direction. Therefore, the lens device 10 in the embodiment is provided as a compact lens device.

Meanwhile, in the lens device of the four lens arrangement according to the embodiment, maintaining the stroke of the focus lens 18 arranged on the rear side on the imaging optical axis L is of an especially needed requirement in maintaining the optical characteristics of the lens device 10. While maintaining the stroke of the focus lens 18, the lens frame 34 is structurally to be retracted at its front cylinder 35 on the imaging optical axis L relative to the motor coils 62, 92 as shown in Fig. 5 when the focus lens comes closest to the vibration-proof lens 16. This provides a lens device 10 of a four-lens arrangement that is compact in the optical axis direction without the need to reduce the length of the motor coils 62, 92 in the optical axis direction.

This application claims foreign priority from Japanese Patent Application No. 2007-65899 filed March 14, 2007, the contents of which is herein incorporated by reference.

## Claims

1. A lens device comprising:
a vibration-proof lens;
a movable lens disposed adjacent to the vibration-proof lens and moving in a direction of an imaging optical axis of the lens device; and
a plate-like motor coil disposed around an outer periphery of the vibration-proof lens and driving the vibration-proof lens,
the movable lens being located in a retracted position on the imaging optical axis relative to the plate-like motor coil when the movable lens moves closest to the plate like motor coil.

2. The lens device according to claim 1, which is a four-grouped lens device including a first lens group, a second lens group, a third lens group, and a fourth lens group,
the first lens group being a front lens, the second lens group being a variator lens moving in the direction of the imaging optical axis, the third lens group being the vibration-proof lens, and the fourth lens group being the movable lens that is a focus lens.
